(19) Europäisches Patentamt
European Patent Office
Office européen des brevets

(11) **EP 3 963 196 B1**

(12) **FASCICULE DE BREVET EUROPEEN**

(45) Date de publication et mention de la délivrance du brevet:
**12.07.2023 Bulletin 2023/28**

(21) Numéro de dépôt: **20715886.6**

(22) Date de dépôt: **03.04.2020**

(51) Classification Internationale des Brevets (IPC):
**F02K 1/38** $^{(2006.01)}$ **F02K 1/48** $^{(2006.01)}$

(52) Classification Coopérative des Brevets (CPC):
**F02K 1/386; F02K 1/48;** F05D 2250/611;
F05D 2300/50212

(86) Numéro de dépôt international:
**PCT/EP2020/059584**

(87) Numéro de publication internationale:
**WO 2020/224890 (12.11.2020 Gazette 2020/46)**

(54) **MÉLANGEUR À FLUX SÉPARÉS DE TURBOMACHINE**

SEPARATER STRÖMUNGSMISCHER FÜR EINEN TURBINENMOTOR

TURBINE ENGINE SEPARATE FLOW MIXER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2019 FR 1904664**

(43) Date de publication de la demande:
**09.03.2022 Bulletin 2022/10**

(73) Titulaire: **SAFRAN AIRCRAFT ENGINES**
**75015 Paris (FR)**

(72) Inventeurs:
• **TELMAN, Cyrille**
**77550 MOISSY-CRAMAYEL (FR)**

• **VINCENT, Pierre**
**77550 MOISSY-CRAMAYEL (FR)**
• **LAMBERT, Olivier, Arnaud, Fabien**
**77550 MOISSY-CRAMAYEL (FR)**
• **AMOEDO, Simon, José, Pierre**
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
**EP-A2- 2 546 505      US-A1- 2002 125 340**
**US-A1- 2009 178 410      US-A1- 2013 327 047**

**Description**

Domaine Technique

La présente invention se rapporte au domaine général des tuyères équipant les turbomachines d'avion. Elle concerne plus particulièrement les tuyères à flux séparés équipées de mélangeurs de flux qui permettent de réduire le bruit de jet en sortie de la tuyère tout en améliorant les performances du moteur.

Technique antérieure

Les tuyères à flux séparés de turbomachines se composent généralement d'une nacelle à flux confluent renfermant un capot primaire définissant un premier canal annulaire pour l'écoulement d'un flux primaire (ou flux chaud) issu de la chambre de combustion et un capot secondaire disposé concentriquement autour du capot primaire de façon à définir un second canal annulaire pour l'écoulement d'un flux secondaire (ou flux froid) provenant de la soufflante.

Afin de réduire le bruit de jet engendré en sortie d'une telle tuyère, il est connu d'utiliser des mélangeurs ayant une conception spécifique pour favoriser le mélange entre le flux primaire et le flux secondaire issus de la turbomachine. Une des conceptions les plus utilisées dans les turbomachines civiles est celle du mélangeur à lobes qui permet d'obtenir un cisaillement radial entre les flux primaire et secondaire afin de favoriser leur mélange.

Plus précisément, ce type de mélangeur se présente sous la forme d'une partie sinusoïdale qui est fixé sur des brides d'attache du carter d'échappement de la tuyère et qui présente des lobes internes alternant avec des lobes externes, ces lobes étant répartis sur toute la circonférence du carter d'échappement.

Avec ce type de mélangeur, les lobes internes et externes forment des sillons (ou goulottes) guidant radialement le flux secondaire vers le canal dans lequel s'écoule le flux primaire, et les lobes externes forment d'autres goulottes guidant radialement le flux primaire vers le canal dans lequel s'écoule le flux secondaire. Ainsi, à la sortie du mélangeur, les flux se mélangent par cisaillement selon une direction qui est essentiellement radiale.

Un tel mélangeur à lobes présente cependant un certain nombre de limitations. En particulier, il existe un risque de fuites potentielles au niveau des brides d'attache du carter d'échappement. De plus, du fait de sa forme sinusoïdale, les difficultés de fabrication d'un tel mélangeur sont importantes de sorte qu'il est généralement fabriqué en plusieurs pièces qui sont soudées les unes aux autres. Or, la présence de nombreuses soudures crée des faiblesses du mélangeur au niveau de celles-ci et est la cause d'une perte de performance due au mauvais état de surface inhérent aux cordons de soudures.

Les documents EP2546505A2, US2009/178410A1, US2002/125340A1 et US2013/327047A1 divulgent des mélangeurs de turbomachines.

Exposé de l'invention

La présente invention a donc pour but principal de proposer un mélangeur pour tuyère à flux séparés qui ne présente pas de tels inconvénients.

Conformément à l'invention, ce but est atteint grâce à un mélangeur à flux séparés de turbomachine centré sur un axe longitudinal, comprenant un carter d'échappement, une virole directement raccordée au carter d'échappement et destinée à mélanger les flux issus de la turbomachine, ladite virole comprenant une tôle métallique formée par une succession de premières et secondes bandes longitudinales réparties de façon circonférentielle autour de l'axe longitudinal du mélangeur en disposant les secondes bandes circonférentiellement de part et d'autre des premières bandes, les premières et secondes bandes étant configurées pour former au repos la virole et en fonctionnement des sillons dans la virole, les sillons étant définis par une alternance de lobes internes et de lobes externes. L'invention est remarquable en ce qu'elle propose de recourir à une seule et même tôle métallique comprenant des bandes à dilations thermiques différentes alignées longitudinalement avec des bras du carter d'échappement pour réaliser la partie sinusoïdale d'un mélangeur à lobes. Lors du fonctionnement du moteur, le carter d'échappement de la tuyère s'échauffe et les pièces situées en aval de celui-ci subissent un gradient thermique tangentiel dû à la présence des bras du carter d'échappement. Il en résulte que la virole du mélangeur s'échauffe également et sous l'effet des gradients thermiques, des ondulations de la tôle sont générées. Ces ondulations générées forment ainsi les différents lobes internes et externes d'un mélangeur classique.

Le mélangeur selon l'invention présente ainsi de nombreux avantages du fait notamment que la tôle formant la virole et comprenant les lobes internes et externes est réalisée en une seule et même pièce, ce qui évite les inconvénients liées aux soudures (faiblesse de la pièce et perte de performance notamment). De plus, cette tôle peut être raccordée directement au carter d'échappement de la tuyère sans besoin d'avoir recours à des brides d'attache, ce qui évite les risques de fuites potentielles au niveau de celles-ci. Par ailleurs, un autre avantage réside dans la facilité et les faibles coûts de réparation de la virole : en cas de dommage sur celle-ci, il suffit de couper la partie endommagée et de la remplacer par une autre qui est directement brasée sur la virole.

Les premières et secondes bandes de la virole peuvent avoir des épaisseurs différentes et/ou être réalisées dans des matériaux différents en fonction de la dilatation thermique souhaitée pour ces bandes.

La virole peut être raccordée à une virole externe du carter d'échappement par brasage. Alternativement, elle peut être raccordée à une virole externe du carter d'échappement par soudage.

En fonctionnement, le mélangeur peut être configuré pour obtenir en fonctionnement un écart de température de plus de 100°C - et de préférence de plus de 200°C - entre les premières et secondes bandes.

Les premières et secondes bandes de la virole sont avantageusement réalisées en un matériau à base d'aluminium qui présente un fort coefficient de dilatation thermique.

De préférence, chaque bras du carter d'échappement présent un bord d'attaque et un bord de fuite, le bord de fuite étant aligné axialement avec une jonction entre les premières et secondes bandes de la virole.

L'invention a également pour objet une turbomachine comprenant une tuyère à flux séparés qui est équipée d'un mélangeur tel que défini précédemment.

Brève description des dessins

[Fig. 1] La figure 1 est une vue schématique en perspective d'un mélangeur à flux séparés de turbomachine selon l'invention dans une configuration dite « à froid »
[Fig. 2] La figure 2 représente le mélangeur de la figure 1 dans une configuration dite « à chaud ».

Description des modes de réalisation

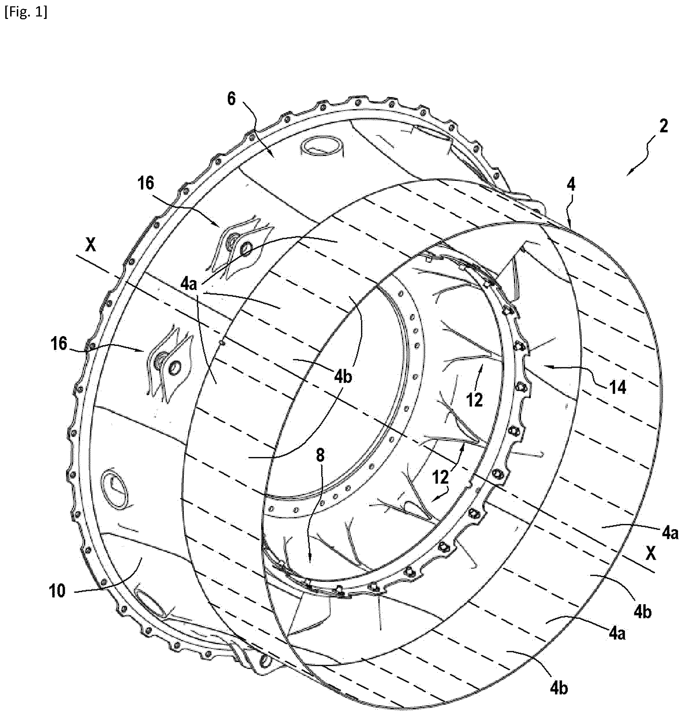

L'invention s'applique à toute tuyère de turbomachine équipée d'un mélangeur à flux séparés tel que celui représenté par la figure 1.

De façon connue, le mélangeur 2 d'une tuyère comprend notamment une virole 4 qui est centrée sur un axe longitudinal X-X du mélangeur à flux séparés et qui est raccordée à un carter d'échappement 6 de la turbomachine.

A chaud, cette virole 4 se présente sous la forme d'une partie sinusoïdale ayant des lobes internes alternant avec des lobes externes, ces lobes étant répartis sur toute la circonférence du carter d'échappement.

Les lobes internes forment des sillons (ou goulottes) guidant radialement le flux froid (ou flux secondaire) provenant de la soufflante vers le canal dans lequel s'écoule le flux chaud (ou flux primaire) issu de la chambre de combustion, et les lobes externes forment d'autres goulottes guidant radialement le flux chaud vers le canal dans lequel s'écoule le flux froid. Ainsi, à la sortie du mélangeur, les flux se mélangent par cisaillement selon une direction qui est essentiellement radiale.

Le carter d'échappement 6 est typiquement situé derrière la turbine basse-pression de la turbomachine et assure la continuité intérieure et extérieure de la veine permettant de séparer le flux chaud issu de la chambre de combustion du flux froid provenant de la soufflante.

De façon plus précise, le carter d'échappement 6 comprend un moyeu 8 de forme annulaire qui est centré sur l'axe longitudinal X-X, une virole externe 10 coaxiale au moyeu 8 avec un diamètre supérieur à ce dernier, et une pluralité de bras 12 reliant le moyeu 8 à la virole externe 10.

L'espace annulaire 14 formé entre le moyeu 8 et la virole externe 10 délimite le canal d'écoulement du flux primaire (ou flux chaud) en sortie de la turbine basse-pression de la turbomachine.

Le carter d'échappement 6 comprend également plusieurs chapes 16 faisant saillie radialement vers l'extérieur par rapport à la virole externe 10 afin de former des points d'attache pour fixer le carter d'échappement à un pylône fixé à l'aile de l'avion.

Les bras 12 du carter d'échappement, qui sont par exemple ici au nombre de 18, sont régulièrement répartis autour de l'axe longitudinal X-X du mélangeur.

Selon l'invention, la virole 4 du mélangeur est formée par une seule et même tôle métallique qui est directement raccordée à la virole externe 10 du carter d'échappement.

De préférence, la virole 4 du mélangeur est raccordée à la virole externe 10 du carter d'échappement de la tuyère par brasage ou par soudage. En particulier, ce raccordement est réalisé sans avoir à recourir à des brides et autres systèmes de fixations (tels que des systèmes à vis/écrous).

Toujours selon l'invention, la virole 4 du mélangeur comprend une succession de premières et secondes bandes longitudinales 4a, 4b qui sont réparties de façon circonférentielle autour de l'axe longitudinal X-X du mélangeur, ces premières et secondes bandes longitudinales 4a, 4b étant chacune alignée longitudinalement avec l'un des bras 12 du carter d'échappement 6.

Plus précisément, la répartition est réalisée de sortie à alterner des secondes bandes 4b présentant à chaud

une première température $T_1$ avec des premières bandes 4a présentant à chaud une seconde température $T_2$ qui est supérieure à la première température $T_1$. En d'autres termes, les secondes bandes 4b sont disposées circonférentiellement de part et d'autre des premières bandes 4a.

Les premières et secondes bandes 4a, 4b sont configurées pour former au repos la virole 4 du mélangeur et en fonctionnement pour former des sillons (ou goulottes) dans la virole. Plus précisément, en fonctionnement, les premières bandes 4a sont configurées pour former par dilatation à chaud les lobes externes du mélangeur, tandis que les secondes bandes 4b sont configurées pour former par dilatation à chaud les lobes internes dudit mélangeur.

Les lobes qui sont ainsi formés ont de préférence une forme allongée.

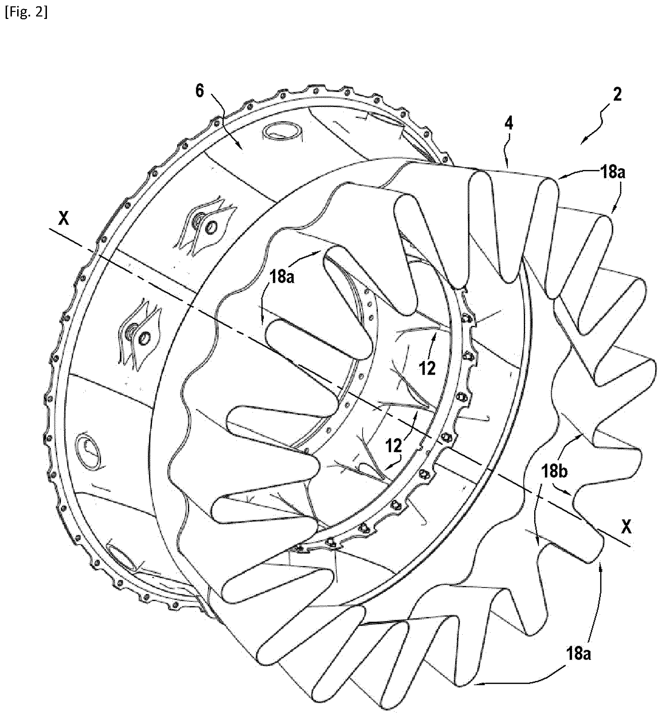

La figure 2 représente ainsi le mélangeur selon l'invention, et plus particulièrement la virole 4 de celui-ci, lorsqu'il est « à chaud », c'est-à-dire lorsque la turbomachine est en fonctionnement de régime de croisière.

Sur cette figure, on voit bien que l'échauffement de la virole 4 du mélangeur induit une dilatation thermique radiale plus ou moins importante de celle-ci en fonction de la bande longitudinale 4a, 4b qui la compose, cette dilatation donnant une forme de marguerite à la virole du mélangeur. En d'autres termes, un gradient circonférentiel est imposé en fonction de la position des premières et secondes bandes longitudinales 4a, 4b de la virole 4 du mélangeur.

Par un calcul thermomécanique prenant en compte la température à chaud de la virole externe du carter d'échappement et les coefficients de dilatation thermique $C_{t1}$ et $C_{t2}$ respectifs des premières et secondes bandes longitudinales de la virole du mélangeur, il est ainsi possible de créer à chaud une alternance de lobes externes 18a correspondant aux premières bandes longitudinales 4a et de lobes internes 18b correspondant aux secondes bandes longitudinales 4b.

Par exemple, la forme des lobes externes 18a et internes 18b obtenus sur la figure 1 l'a été en appliquant un gradient thermique de 200°C à la virole du mélangeur (à savoir $T_1$ = 400°C pour les bandes longitudinales 4b et $T_2$ = 600°C pour les bandes longitudinales 4a) et pour une température uniforme du carter d'échappement égale à 600°C.

Pour un même matériau constituant la virole du mélangeur, il existe une courbe de coefficient de dilatation thermique en fonction de la température. Ainsi, la virole du mélangeur a initialement le même coefficient de dilatation thermique. Par contre, à chaud, la présence et la forme des bras 12 du carter d'échappement 6 vont avoir pour effet de faire dilater la virole de façon plus ou moins importante, dilatation qui se traduit par un déplacement de la virole donné par la formule :

$$\text{Déplacement (en mm)} = \text{rayon de la virole (en mm)} \times \text{alpha (T)} \times (T\text{-}20°C)$$

avec : alpha (T) = coefficient de dilatation thermique à la température T

et T = température

Le paramètre alpha(T) varie donc avec la température et forme à chaud les bandes longitudinales de la virole avec un coefficient de dilatation thermique différent.

On notera que le nombre de lobes externes 18a est égal au nombre de premières bandes longitudinales 4a (ici 18) et que le nombre de lobes internes 18b est égal au nombre de secondes bandes longitudinales 4b (ici 18).

Ainsi, pour obtenir la veine spécifiée à chaud (c'est-à-dire le nombre et la forme des lobes externes et internes du mélangeur), il est nécessaire de connaître le nombre de bras 12 du carter d'échappement 6, ainsi que le gradient tangentiel de température. En effet, le carter d'échappement impose des différences thermiques à l'aval lorsqu'on se trouve du côté intrados et du côté extrados de chacun de ses bras. Les pièces situées en aval du carter d'échappement subissent donc un gradient thermique tangentiel dû à la présence des bras du carter d'échappement.

Comme indiqué précédemment, les premières et secondes bandes 4a, 4b de la virole 4 du mélangeur devront être chacune alignées longitudinalement avec l'un des bras 12 du carter d'échappement 6, et le nombre de bras correspond au nombre de lobes externes et de lobes internes du mélangeur.

De même, la forme des bras 12 du carter d'échappement influe sur la façon dont la virole 4 du mélangeur va se déformer à chaud : plus le profil du bras est convexe, plus le gradient de température est important et formera facilement les bras par déformation à chaud.

Afin d'obtenir des dilatations thermiques différentes suivant les premières et secondes bandes 4a, 4b à partir d'une même tôle métallique, il est possible de jouer sur l'épaisseur de tôle pour chaque bande : les premières bandes 4a peuvent présenter une épaisseur plus faible que les secondes bandes 4b afin de leur conférer une souplesse pour la dilatation thermique supérieure à celle des secondes bandes 4b.

Bien entendu, d'autres dispositions peuvent être prises pour conférer des dilatations thermiques différentes pour les bandes longitudinales de la virole du mélangeur.

En outre, si le gradient thermique tangentiel dû à la présence des bras du carter d'échappement est faible, il est nécessaire de prendre un métal à fort coefficient de dilatation thermique pour réaliser la virole 4 du mélangeur. A l'inverse, si le gradient thermique tangentiel dû à la présence des bras est fort, il faudra limiter le coefficient de dilatation thermique de la tôle formant la virole du mélangeur.

## Revendications

1. Mélangeur (2) à flux séparés de turbomachine centré sur un axe longitudinal (X-X), comprenant un carter d'échappement (6), une virole (4) directement raccordée au carter d'échappement (6) et destinée à mélanger les flux issus de la turbomachine, **caractérisé en ce que** ladite virole (4) comprend une tôle métallique formée par une succession de premières et secondes bandes longitudinales (4a, 4b) réparties de façon circonférentielle autour de l'axe longitudinal du mélangeur en disposant les secondes bandes (4b) circonférentiellement de part et d'autre des premières bandes (4a), les premières et secondes bandes étant configurées pour former au repos la virole (4) et en fonctionnement des sillons dans la virole, les sillons étant définis par une alternance de lobes internes (18b) et de lobes externes (18a).

2. Mélangeur selon la revendication 1, dans lequel les premières et secondes bandes (4a, 4b) de la virole (4) ont des épaisseurs différentes.

3. Mélangeur selon l'une des revendications 1 et 2, dans lequel les premières et secondes bandes (4a, 4b) de la virole (4) sont réalisées dans des matériaux différents.

4. Mélangeur selon l'une quelconque des revendications 1 à 3, dans lequel la virole (4) est raccordée à une virole externe (10) du carter d'échappement par brasage.

5. Mélangeur selon l'une quelconque des revendications 1 à 3, dans lequel la virole (4) est raccordée à une virole externe (10) du carter d'échappement par soudage.

6. Mélangeur selon l'une quelconque des revendications 1 à 5, **caractérisé en ce qu'**il est configuré pour obtenir en fonctionnement un écart de température de plus de 100°C entre les premières et secondes bandes (4a, 4b).

7. Mélangeur selon l'une quelconque des revendications 1 à 6, **caractérisé en ce qu'**il est configuré pour obtenir en fonctionnement un écart de température de plus de 200°C entre les premières et secondes bandes (4a, 4b).

8. Mélangeur selon l'une quelconque des revendications 1 à 7, dans lequel les premières et secondes bandes (4a, 4b) de la virole (4) sont réalisées en un matériau à base d'aluminium.

9. Mélangeur selon l'une quelconque des revendications 4 à 5, dans lequel le carter d'échappement (6) comprend un moyeu (8) de forme annulaire centré sur l'axe longitudinal (X-X) et une pluralité de bras (12) reliant le moyeu (8) à la virole externe (10), chaque bras (12) du carter d'échappement (6) présentant un bord d'attaque et un bord de fuite, le bord de fuite étant aligné axialement avec une jonction entre les premières et secondes bandes (4a, 4b) de la virole (4).

10. Turbomachine comprenant une tuyère à flux séparés qui est équipée d'un mélangeur (2) selon l'une quelconque des revendications 1 à 9.

## Patentansprüche

1. Teilstrom-Mischer (2) für eine Turbomaschine, der auf einer Längsachse (X-X) zentriert ist, umfassend ein Austrittsgehäuse (6), einen Mantel (4), der direkt mit dem Austrittsgehäuse (6) verbunden und dazu bestimmt ist, die aus der Turbomaschine austretenden Ströme zu mischen, **dadurch gekennzeichnet, dass** der Mantel (4) ein Metallblech umfasst, das aus einer Abfolge von ersten und zweiten Längsstreifen (4a, 4b) gebildet wird, die auf um die Längsachse des Mischers umlaufende Weise verteilt sind, indem die zweiten Streifen (4b) in Umfangsrichtung zu beiden Seiten der ersten Streifen (4a) angeordnet sind, wobei die ersten und zweiten Streifen dazu ausgestaltet sind, in Ruhe den Mantel (4) zu bilden und im Betrieb Kanäle in dem Mantel zu bilden, wobei die Kanäle durch einen Wechsel von inneren Lappen (18b) und äußeren Lappen (18a) definiert werden.

2. Mischer nach Anspruch 1, wobei die ersten und zweiten Streifen (4a, 4b) des Mantels (4) unterschiedliche Dicken aufweisen.

3. Mischer nach einem der Ansprüche 1 und 2, wobei die ersten und zweiten Streifen (4a, 4b) des Mantels (4) aus unterschiedlichen Materialien verwirklicht sind.

4. Mischer nach einem der Ansprüche 1 bis 3, wobei der Mantel (4) mit einem äußeren Mantel (10) des Austrittsgehäuses durch Verlöten verbunden ist.

5. Mischer nach einem der Ansprüche 1 bis 3, wobei der Mantel (4) mit einem äußeren Mantel (10) des Austrittsgehäuses durch Verschweißen verbunden ist.

6. Mischer nach einem der Ansprüche 1 bis 5, **dadurch gekennzeichnet, dass** er dazu ausgestaltet ist, im Betrieb einen Temperaturunterschied von mehr als 100 °C zwischen den ersten und zweiten Streifen (4a, 4b) zu erzielen.

7. Mischer nach einem der Ansprüche 1 bis 6, **dadurch gekennzeichnet, dass** er dazu ausgestaltet ist, im Betrieb einen Temperaturunterschied von mehr als 200 °C zwischen den ersten und zweiten Streifen (4a, 4b) zu erzielen.

8. Mischer nach einem der Ansprüche 1 bis 7, wobei die ersten und zweiten Streifen (4a, 4b) des Mantels (4) aus einem Material auf Basis von Aluminium verwirklicht sind.

9. Mischer nach einem der Ansprüche 4 bis 5, wobei das Austrittsgehäuse (6) eine Nabe (8) in Ringform umfasst, die auf der Längsachse (X-X) zentriert ist, sowie mehrere Arme (12), welche die Nabe (8) mit dem äußeren Mantel (10) verbinden, wobei jeder Arm (12) des Austrittsgehäuses (6) eine Vorderkante und eine Hinterkante aufweist, wobei die Hinterkante axial mit einer Verbindung zwischen den ersten und zweiten Streifen (4a, 4b) des Mantels (4) ausgerichtet ist.

10. Turbomaschine, umfassend ein Teilstrom-Strahlrohr, das mit einem Mischer (2) nach einem der Ansprüche 1 bis 9 ausgestattet ist.

**Claims**

1. A turbine engine separate flow mixer (2) centered on a longitudinal axis (X-X), comprising an exhaust housing (6), a shroud (4) directly connected to the exhaust housing (6) and intended to mix the flows originating in the turbine engine, **characterized in that** said shroud (4) comprises a metal sheet formed by a succession of first and second longitudinal strips (4a, 4b) distributed circumferentially around the longitudinal axis of the mixer by circumferentially placing the second strips (4b) on either side of the first strips (4a), the first and second strips being configured to form the shroud (4) when at rest and grooves in the shroud when operating, the grooves being defined by an alternation of internal lobes (18b) and of external lobes (18a).

2. The mixer according to claim 1, wherein the first and second strips (4a, 4b) of the shroud (4) have different thicknesses.

3. The mixer according to one of claims 1 and 2, wherein the first and second strips (4a, 4b) of the shroud (4) are made of different materials.

4. The mixer according to any one of claims 1 to 3, wherein the shroud (4) is connected to an external shroud (10) of the exhaust housing by brazing.

5. The mixer according to any one of claims 1 to 3, wherein the shroud (4) is connected to an external shroud (10) of the exhaust housing by welding.

6. The mixer according to any one of claims 1 to 5, **characterized in that** it is configured to obtain, when operating, a temperature difference of more than 100°C between the first and second strips (4a, 4b).

7. The mixer according to any one of claims 1 to 6, **characterized in that** it is configured to obtain, when operating, a temperature difference of more than 200°C between the first and second strips (4a, 4b).

8. The mixer according to any one of claims 1 to 7, wherein the first and second strips (4a, 4b) of the shroud (4) are made of an aluminum-based material.

9. The mixer according to any one of claims 4 or 5, wherein the exhaust housing (6) comprises an annular hub (8) centered on the longitudinal axis (X-X) and a plurality of arms (12) connecting the hub (8) to the external shroud (10), each arm (12) of the exhaust housing (6) having a leading edge and a trailing edge, the trailing edge being axially aligned with a junction between the first and second strips (4a, 4b) of the shroud (4).

10. A turbine engine comprising a separate flow nozzle which is equipped with a mixer (2) according to any one of claims 1 to 9.

[Fig. 1]

[Fig. 2]

**EP 3 963 196 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2546505 A2
- US 2009178410 A1
- US 2002125340 A1
- US 2013327047 A1

**10**